# EUROPEAN PATENT APPLICATION

(11) **EP 1 124 301 A2**
(43) Date of publication of application: **16.08.2001**
(21) Application number: 00128259.9
(22) Date of filing: 22.12.2000
(51) Int. Cl.: H02J 9/00

(54) **Remote power management system**

(30) Priority: 27.12.1999 JP 36990799
(71) Applicant: Idgate Co., Ltd., Tokyo (JP)
(72) Inventor: Fukui, Masahiro, Tokyo (JP)
(74) Representative: Goddar, Heinz J., Dr.

(57) **Abstract**

The remote power management system of information processing apparatus or the like solves problems as to occurrence of uncontrollability of power supply due to malfunction of an uninterruptible power supply device (2) that is incapable of trying restart and recovery of information processing apparatus of the certain type merely through start or termination of power supply or alternatively as to unwanted interruption of power supply to information processing apparatus constituting a network. The system comprises a remote power switch (3) for change over between turn-on and turn-off of a power supply line (6), information processing apparatus or network equipment for receiving electrical power form the power supply line (6) via the power switch (3), and a remote control device (5) for controlling changeover of the remote power switch (3) from a remote location wherein these are connected together over a network (7). The remote control device (5) is operable based on a specific command from the remote location for outputting a control signal for turn-on or turn-off of power supply via the network to the remote power switch. The information processing apparatus (4) has interface means for letting the information processing apparatus (4) get restarted in response to the turn-on control signal as output from the remote control device.

## Description

### Background of the Invention

### Field of the Invention

This invention relates generally to remote power control/management systems of information processing apparatus or the like and, more particularly, to a remote power management system for performing from a remote location the required power management with respect to information processing apparatus or network equipment such as a server or else being connected over a single network.

### Description of the Prior Art

Prior known power management devices of information processing apparatus or the like typically include a main power supply device for supplying electrical power, an uninterruptible power supply (UPS) device for backup of supplying power only within a specified length of time period after interruption of the main power supply device, and information processing apparatus such as a server or else under power control/management. The information processing apparatus normally receives power supply from the main power supply device and, in emergency events, can receive supply of backup power from the uninterruptible power supply device for a predetermined time period.

On the other hand, an advanced uninterruptible power supply device capable of performing power control/management of information processing apparatus from remote locations has been developed, and a remote power management system utilizing the same has been proposed. This remote power management device is for execution of startup and termination of information processing apparatus in addition to backup of power in emergency events, by starting or ending supply of power to the information processing apparatus through operation of the uninterruptible power supply device from a remote location or "site".

However, with this prior art remote power management system, it is impossible by mere start and end of this power supply to try restart and recovery of information processing apparatus of certain types. This can be said because depending upon the type of BIOS owned by the information processing apparatus, the information processing apparatus will often unable to get restarted by mere execution of stop/restart of power supply. In addition, upon occurrence of an operation failure or malfunction of the uninterruptible power supply device per se which is doing remote power management in this traditional remote power management apparatus, the power supply control will become unable to work or alternatively power supply to information processing apparatus and/or network equipment making up the network will be unintentionally interrupted.

### Summary of the Invention

It is therefore an object of the present invention to provide a new remote power control/management system capable of avoiding the problems faced with the prior art. It is another object of this invention to provide a remote power management system capable of doing power management with redundancy even with respect to malfunction of an uninterruptible power supply device and information processing apparatus or network equipment as connected to a network. It is a yet another object of the invention to provide a remote power management system capable of trying cut-off and restart of electrical power supply irrespective of malfunction of a remote control device used to change over or switch between connection (turn-on) and disconnection (turn-off) of a power supply line.

To attain the foregoing objects, a remote power management system of information processing apparatus or the like in accordance with a first invention is a remote power management system of information processing apparatus or the like for performing, from a remote location, power management with respect to information processing apparatus or network equipment such as a server or else being connected over a single network, the remote power management system comprising a remote power switch connected over the single network for changing over between turn-on and turn-off of a power supply line, information processing apparatus or network equipment connected over the network for receiving power supply from the power supply line via the power switch, and a remote control device connected over the network for controlling from the remote location the changeover of the remote power switch, characterized in that the remote control device is operable based on a certain command from the remote location to output a control signal for turn-on or turn-off of power supply to the remote power switch via the network, that the information processing apparatus has interface means for letting the information processing apparatus get restarted in response to the turn-on control signal as output from the remote control device, and that a power input end of the remote power switch is connected via the power supply line to a single main power supply device. Whereby, it is possible to solve the problem that the information processing apparatus fails to get restarted by mere execution of stop/restart of power supply depending on the type of BIOS the information processing apparatus has therein.

In addition, a remote power management system of information processing apparatus or the like in accordance with a second invention is a remote power management system of information processing apparatus or the like for performing, from a remote location, power management with respect to information processing apparatus or network equipment such as a server or else being connected over a single network, characterized by constituting a plurality of power source-composite network systems each comprising a remote power switch connected over the single network for switching between turn-on and turn-off of a power supply line, information processing apparatus or network equipment connected over the network for receiving power supply from the power supply line via the power switch, and a remote control device connected over the network for controlling from the remote location the switching of the remote power switch, wherein the plurality of power source-composite network systems are connected by the network of common use, and wherein a power input end of the remote power switch in each of the plurality of power source-composite network systems is connected to a single main power supply device via a power supply line. Since the power source-composite network systems consisting essentially of the information processing apparatus or network equipment, the remote power switch and the remote control device are duplexed in configuration, even when the network equipment and/or remote control device within one power source-composite network systemmalfunctions, it is possible by a separate remote control device within the other power source-composite network system to try cut-off and restart of power supply through operation of the remote power switch within the power source-composite network system under malfunction. Whereby, it is possible to achieve the intended remote power management functionality also accommodating the remedy for malfunction of the information processing apparatus or network equipment while further increasing the disturbance transparency of the network of interest.

Here, it will be preferable that the remote control device is operable based on a certain command from the remote location for selectively outputting via the network a control signal for turn-on or turn-off of power supply to the remote power switch within the same power source-composite network system or alternatively to the remote power switch within another power source-composite network system. Also preferably the information processing apparatus has an interface means for letting the information processing apparatus get restarted in response to the turn-on control signal as output from the remote control device.

### Brief Description of the Drawings

The invention will be explained in more detail in conjunction with appended drawings, wherein:
Fig.1 is a diagram for explanation of a remote power management system in accordance with a first embodiment of the present invention, and
Fig.2 is a diagram for explanation of a remote power management system in accordance with a second embodiment of the present invention.

### Detailed Description of the Preferred Embodiments

Preferred embodiments of the present invention will now be set forth with reference to the accompanying drawings below.

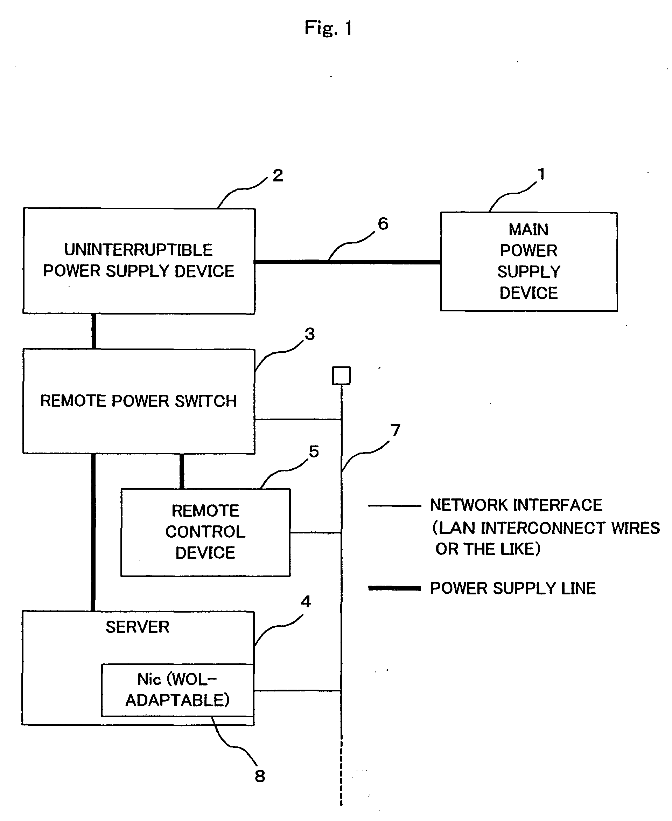

Referring to Fig. 1, there is shown a first embodiment of the remote power control/management system in accordance with the present invention. This system shown herein is arranged to include a main power supply device 1 for supplying electrical power required, an uninterruptible power supply (UPS) device 2 for backup of power supply within a limited length of time period in which the main power supply device interrupts its operation, a remote power switch 3 for changing over or switching between turn-on and turn-off of a power supply line 6 from a remote location or "site", an information processing apparatus 4 under power management such as a server or else, and a remote control device 5 for controlling from the remote site the switching of the remote power switch 3. The remote power switch 3 is connected via the power supply line 6 to the uninterruptible power supply device 2; further, the uninterruptible power supply device 2 is connected by power supply line 6 to the main power supply device 1. The information processing apparatus 4 and the remote control device 5 are each connected via power supply line 6 to the remote power switch 3, thereby permitting all-time receipt of electrical power from the main power supply device 1 (in emergency events, from the uninterruptible power supply device 2). In addition, the remote power switch 3 and the information processing apparatus 4 plus the remote control device 5 are mutually connected together by a network interface 7, such as LAN interconnect wires or the like. The remote control device 5 is operatively responsive to receipt of a power-on or power-off command from the remote site for simultaneously or individually controlling turn-on/off of the remote power switch 3 and the information processing apparatus 4, wherein the switch outputs a control signal for turn-on or turn-off of power supply toward the remote power switch 3 and information processing apparatus 4 via the network interface 7. The information processing apparatus 4 comprises a so-called Wake-On-Lan (WOL)-adaptable network interface card (Nic) 8, to which the power-on control signal is input.

In the remote power management system in accordance with the first embodiment, power-on or power-off of the information processing apparatus 4 is normally done via the OS under control of the remote control device 5. Additionally, in such normal procedure, it will also happen in some cases that the information processing apparatus 4 is subjected to rebooting (restart).

On the other hand, when the information processing apparatus 4 becomes unstable in operation due to some causes resulting in unavailability of any intended control via the OS, the remote control device 5 is used to permit the remote power switch 3 to operate to cut off the power supply line for interruption of power supply and, thereafter, immediately turn on again the power supply line for restart of power supply. With this operation, it is possible to try to execute restart and recovery of the information processing apparatus 4. It should be noted here that depending on the OS configuration of the information processing apparatus 4, the restart will sometimes be unattainable through mere execution of this turn-off/turn-on operation. In preparation for such case, with the remote power management system in accordance with the illustrative embodiment, it is possible, by letting the remote control device 5 send forth a WOL packet to the Nic 8 as provided at the information processing apparatus 4, to have a try of restart and recovery of the information processing apparatus.

However, even in the remote power management system in accordance with the first embodiment stated above, it will sometimes happen that such remote power management becomes unable due to malfunction of certain network equipment(s). This can be said because in the event that the Nic 8 of the information processing apparatus 4 being connected to the network interface 7 malfunctions by way of example, mere execution of the cut-off and restart of power supply operation using a command sent to the remote control device 5 from a remote site makes it impossible in some cases to try to restart and recover the information processing apparatus 4. Additionally, in case the remote control device 5 malfunctions also, it becomes unable to attempt to restart and recover the information processing apparatus 4 from the remote site. In such cases, a maintenance service person must go to the appointed place for manually operating the remote power switch 3 to thereby try to restart and recover all the constituent elements within the network, such as the information processing apparatus 4 and remote control device 5 and others. Accordingly, there is a problem that any services utilizing the remote power switch 3 must be stopped within a time period spanning from occurrence of malfunction and manual restart and/or recovery.

The above-noted problem may be solved by use of a remote power management system with a specific configuration as will be described in detail below.

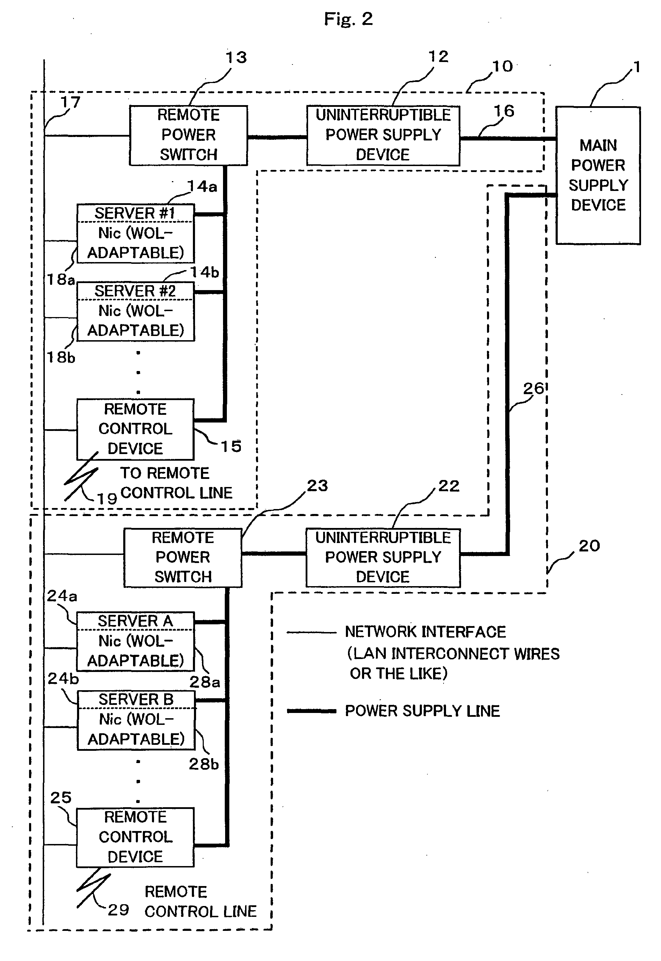

Fig. 2 shows a second embodiment of the remote power management system in accordance with the present invention. This system shown herein is arranged to comprise a couple of power source-composite network systems 10, 20 which receive electric power from a single main power supply device 1 operatively associated therewith.

One power source-composite network system 10 includes therein an uninterruptible power supply device 12, a remote power switch 13, information processing apparatus 14a, 14b, ... formed of a server #1, server #2 and others, a remote control device 15, a power supply line 16, and a network interface 17 formed of a backbone or "infrastructure" LAN. The information processing apparatuses 14a, 14b, ... respectively have WOL-adaptable Nics 18a, 18b, ..., to each of which a power-on or power-off control signal is input.

The remaining power source-composite network system 20 has an uninterruptible power supply device 22, a remote power switch 23, information processing apparatus 24a, 24b, ... formed of a server "A", server "B", and others, a remote control device 25 and a power supply line 26, and is arranged in a similar manner to the one power source-composite network system 10. Here, the information processing apparatuses 24a, 24b, ... are provided in a way corresponding to respective ones of the information processing apparatuses 14a, 14b, ... of the power source-composite network system 10, thereby, for example, when the information processing apparatus 14a malfunctions, the information processing apparatus 24a is arranged so that it can provide services which are the same as those services as has been provided by the information processing apparatus 14a. The other power source-composite network system 20 has its own network interface 17 in common use with the aforesaid one power source-composite network system 10, to which interface the remote power switch 23, Nics 28a, 28b, ... of the information processing apparatuses 24a, 24b, ..., and the remote control device 25 are connected.

Although, in the remote power management system in accordance with the second embodiment, operations of the uninterruptible power supply devices 12, 22 and the remote power switches within respective power source-composite network systems are the same as the operations thereof in the remote power management system in accordance with the first embodiment, powercut-off/restartingoperations performed by the remote control devices 15, 25 are different from those in the case of the first embodiment as will be described below.

The remote control device 15 within one power source-composite network system 10 is operable based on a specific command as sent from a remote location or site over a remote control/management line 19 to output a control signal for power-on and power-off toward the remote power switch 13 within the same power source-composite network system 10 via the network interface 17 while at the same time selectively outputting it to the remote control device 25 within the other power source-composite network system 20. An explanation will now be given of one exemplary operation in case obstruction takes place due to some causes at the information processing apparatus 14a within the power source-composite network system 10.

After a network administrative operator at the remote site becomes aware of occurrence of such obstruction at the information processing apparatus 14a, he/she first issues a specified command to force the remote power switch 13 to execute cut-off and restart of power supply tasks, which command is sent forth via a separately provided remote control line 19 toward the remote control device 15 within the same power source-composite network system 10. As long as the remote control device 15 operates normally, the remote control device 15 which has received this command requests via the network interface 17 the remote power switch 13 to perform cut-off and restart of power supply; then, the remote power switch 13 will execute this changeover. Whereby, through the cut-off and restart of power supply procedure, an attempt is made to restart and recover the information processing apparatus 14a that presently experiences the obstruction. Note here that if this cut-off and restart of power supply procedure fails to let the information processing apparatus 14a get restarted, then the remote control device 15 further transmits a WOL packet (turn-on control signal) to the WOL-adaptable Nic 18a owned by the information processing apparatus 14a.

Supposing here that obstruction occurs at the remote control device 15 also, the remote control device 15 will no longer respond to the specified command and, thus, will never request the remote power switch 13 to perform cut-off and restart of power supply operation. If this is the case, the network administrative operator issues via a remote control/management line 29 a specified command toward the remote control device 25 within the other power source-composite network system 20, which command is for letting the remote power switch 13 within the power source-composite network system 10 perform cut-off and restart of power supply operation. Upon receipt of this command, the remote control device 25 requests via the network interface 17 the remote power switch 13 to perform the required cut-off and restart of power supply operation; then, the remote power switch 13 executes this changeover. In this way, even in cases where the remote control device within one power source-compositenetworksystemispresentlymalfunctioning, theremote control device within the other power source-composite network system is expected to operate for backup of such operation. Consequently, although in the remote power management system in accordance with the first embodiment it is impossible in case the remote control device malfunctions to let the information processing apparatus do restart and recovery, such is made possible for the first time by the remote power management system in accordance with the second embodiment.

It should be noted in the first embodiment and second embodiment that in the event that abnormality occurs at the main power supply device per se resulting in unavailability of recovery of the main power supply device within a predetermined length of time period that the uninterruptible power supply device guarantees backup of the power supply, the operation system or else of the information processing apparatus may alternatively be normally terminated by the uninterruptible power supply device's operation in a view point of protection of these information processing apparatus or the like.

In the second embodiment stated above, the remote power management system is configured from two separate power source-composite network systems 10, 20; however, it would be readily appreciated that the system may alternatively be made up from three or more power source-composite network systems. Additionally, in the first embodiment and second embodiment, the remote control devices 5, 15, 25 may be modified to perform, for example, so-called "remote router" operations for data interexchange in ordinary cases, in addition to execution of respective ones of the above-noted operations. Furthermore, the network interfaces 7, 17 may also be wireless, optical, or infrared interfaces in place of the LAN interconnect wires.

As has been explained above, in accordance with the instant invention, it is possible to provide the remote power control/management system capable of reliably trying execution of restart and recovery of the information processing apparatus without depending upon the type of such information processing apparatus. It is also possible to perform power management with redundancy even upon occurrence of operation failures of the uninterruptible power supply device and/or malfunction of information processing apparatus or network equipment as connected to the network of interest. In addition, it is possible to provide the intended remote power management system capable of trying cut-off and restart of power supply even upon occurrence of malfunction of a remote control device used to change over between connection (turn-on) and disconnection (turn-off) of a power supply line or lines.

The preferred embodiment of the present invention has been disclosed by way of example and it will be understood that other modifications may occur to those skilled in the art without departing from the scope and the spirit of the appended claims.

The features disclosed in the foregoing description, in the claims and/or in the accompanying drawings may, both separately and in any combination thereof, be material for realising the invention in diverse forms thereof.

## Claims

1. A remote power management system of information processing apparatus or the like for performing, from a remote location, power management with respect to information processing apparatus or network equipment such as a server or else being connected over a single network, the remote power management system comprising:
a remote power switch connected over the single network for changing over between turn-on and turn-off of a power supply line;
information processing apparatus or network equipment connected over said network for receiving power supply from the power supply line via said power switch; and
a remote control device connected over said network for controlling from the remote location the changeover of the remote power switch;
wherein said remote control device is operable based on a certain command from the remote location to output a control signal for turn-on or turn-off of power supply to said remote power switch via said network;
wherein said information processing apparatus has interfacemeans for letting said information processing apparatus get restarted in response to the turn-on control signal as output from said remote control device; and
wherein a power input end of said remote power switch is connected via said power supply line to a single main power supply device.

2. A remote power management system of information processing apparatus or the like for performing, from a remote location, power management with respect to information processing apparatus or network equipment such as a server or else being connected over a single network, the remote power management system comprising:
a plurality of power source-composite network systems each comprising a remote power switch connected over the single network for switching between turn-on and turn-off of a power supply line;
information processing apparatus or network equipment connected over said network for receiving power supply from the power supply line via said power switch; and
a remote control device connected over said network for controlling from the remote location the switching of the remote power switch;
wherein said plurality of power source-composite network systems are connected by said network of common use; and
wherein a power input end of said remote power switch in each of said plurality of power source-composite network systems is connected to a single main power supply device via a power supply line.

3. The remote power management system of information processing apparatus or the like as claimed in claim 2, wherein said remote control device is operable based on a certain command from the remote location for selectively outputting via said network a control signal for turn-on or turn-off of power supply to the remote power switch within the same power source-composite network system or alternatively to the remote power switch within another power source-composite network system.

4. The remote power management system of information processing apparatus or the like as claimed in claim 3, wherein said information processing apparatus has interface means for letting said information processing apparatus get restarted in response to the turn-on control signal as output from the remote control device.
